(19) Europäisches Patentamt / European Patent Office / Office européen des brevets

(11) **EP 2 514 952 A1**

(12) **EUROPEAN PATENT APPLICATION**
published in accordance with Art. 153(4) EPC

(43) Date of publication:
**24.10.2012 Bulletin 2012/43**

(21) Application number: **10837332.5**

(22) Date of filing: **24.09.2010**

(51) Int Cl.:
*F02D 21/08* (2006.01)       *F02D 13/02* (2006.01)
*F02D 45/00* (2006.01)       *F02M 25/07* (2006.01)
*F02P 5/15* (2006.01)       *F02P 5/152* (2006.01)
*F02P 5/153* (2006.01)

(86) International application number:
**PCT/JP2010/066476**

(87) International publication number:
**WO 2011/074302 (23.06.2011 Gazette 2011/25)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **18.12.2009 JP 2009287500**

(71) Applicant: **Honda Motor Co., Ltd.
Minato-ku
Tokyo 107-8556 (JP)**

(72) Inventors:
 • **IRIE Seiichiro
  Wako-shi
  Saitama 351-0113 (JP)**
 • **KONO Yoshitomo
  Wako-shi
  Saitama 351-0113 (JP)**
 • **KOMATSU Hirotaka
  Wako-shi
  Saitama 351-0113 (JP)**

 • **TONE Hiroaki
  Wako-shi
  Saitama 351-0113 (JP)**
 • **YAMAMOTO Junpei
  Wako-shi
  Saitama 351-0113 (JP)**
 • **KUBO Hiroshi
  Wako-shi
  Saitama 351-0113 (JP)**
 • **HIRABOSHI Toshifumi
  Wako-shi
  Saitama 351-0113 (JP)**

(74) Representative: **Prechtel, Jörg et al
Weickmann & Weickmann
Patentanwälte
Postfach 86 08 20
81635 München (DE)**

(54) **CONTROL DEVICE FOR INTERNAL-COMBUSTION ENGINE**

(57)     Provided is a control device for an internal-combustion engine provided with a throttle valve installed in an intake path. A full intake air amount, which is the intake air amount corresponding to when the throttle valve is fully open, is calculated in accordance with engine revolution speed, and a theoretical intake air amount, which corresponds to when engine exhaust gas does not recirculate to a combustion chamber, is calculated in accordance with the full intake air amount and an intake pressure. An actual intake air amount of the engine is detected or estimated, and an exhaust gas recirculation rate is calculated using the theoretical intake air amount and the actual intake air amount. The engine is controlled using the calculated exhaust gas recirculation rate.

[FIG. 10]

```
        TOTAL EGR RATIO
         CALCULATION
              │
S11    CALCULATE GAWOTSTD
              │
S12     CALCULATE GAWOT
              │
S13      CALCULATE GATH
        ACCORDING TO PBA
              │
S14     CALCULATE GAIRCYL
              │
S15     CALCULATE REGRT
              │
             EXIT
```

Printed by Jouve, 75001 PARIS (FR)

EP 2 514 952 A1

**Description**

TECHNICAL FIELD

The present invention relates to a control system for an internal combustion engine, and particularly to the control system for the internal combustion engine, which performs a control based on an exhaust gas recirculation ratio indicative of a ratio of exhaust gases (burnt gases) contained in the gases sucked into the combustion chamber of the engine.

BACKGROUND ART

Patent Document 1 (shown below) discloses a control system for an internal combustion engine, wherein a residual gas ratio (an internal exhaust gas recirculation ratio), which is a residual ratio of burnt gases remaining in the combustion chamber after combustion, is calculated, and the ignition timing is controlled according to the residual gas ratio. According to this control system, the residual gas ratio is calculated based on the engine rotational speed, the valve overlap amount (an overlapped period of the valve opening periods corresponding to the intake valve and the exhaust valve), the intake pressure, the exhaust gas temperature, and the intake air amount.

Further, a known control system for an internal combustion engine having an exhaust gas recirculation mechanism, uses a method for calculating an exhaust gas recirculation ratio using a map for calculating the exhaust gas recirculation ratio (the external exhaust gas recirculation ratio) set according to an opening of the exhaust gas recirculation control valve.

PRIOR ART DOCUMENT

Patent Document

Patent Document 1: Japanese Patent Laid-open No. 2003-269306

SUMMARY OF THE INVENTION

Problems to be Solved by the Invention

According to the calculation method of the residual gas ratio shown in Patent Document 1, the number of parameters applied to the calculation is comparatively large, which raises a problem that the man power necessary for setting the tables or maps becomes large. Further, in the conventional method for calculating the external exhaust gas recirculation ratio, many maps are necessary corresponding to various operating conditions. Consequently, in order to calculate the exhaust gas recirculation ratio taking both of the internal exhaust gas recirculation and the external exhaust gas recirculation into account, still more tables or maps are necessary, which requires huge man power for setting tables and/or maps.

The present invention was made contemplating the above-described point, and an objective of the present invention is to provide a control system for an internal combustion engine, which can accurately calculate the exhaust gas recirculation ratio according to the engine operating condition with a comparatively simple method.

Means for Solving the Problems

To attain the above objective, the present invention provides a control system for an internal combustion engine having a throttle valve (3) disposed in an intake passage (2) of the engine. This control system is characterized by comprising rotational speed detecting means, intake pressure detecting means, wide-open intake air amount calculating means, theoretical intake air amount calculating means, intake air amount obtaining means, and exhaust gas recirculation ratio calculating means, wherein the engine is controlled using the exhaust gas recirculation ratio. The rotational speed detecting means detects an rotational speed (NE) of the engine, and the intake pressure detecting means detects an intake pressure (PBA) of the engine. The wide-open intake air amount calculating means calculates a wide-open intake air amount (GAWOT) according to the engine rotational speed (NE). The wide-open intake air amount is an intake air amount corresponding to a state where the throttle valve is fully opened. The theoretical intake air amount calculating means calculates a theoretical intake air amount (GATH) according to the wide-open intake air amount (GAWOT) and the intake pressure (PBA). The theoretical intake air amount (GATH) is an intake air amount corresponding to a state where no exhaust gas of the engine is recirculated to a combustion chamber of the engine. The intake air amount obtaining means detects or estimates an actual intake air amount (GAIRCYL) of the engine. The exhaust gas recirculation ratio calculating means calculates an exhaust gas recirculation ratio (REGRT) using the theoretical intake air amount (GATH) and the actual intake air amount (GAIRCYL).

With this configuration, the wide-open intake air amount, which is an intake air amount corresponding to the state where the throttle valve is fully opened, is calculated according to the engine rotational speed, and the theoretical intake air amount, which is an ntake air amount corresponding to the state where no exhaust gas of the engine is recirculated to a combustion chamber of the engine, is calculated according to the wide-open intake air amount and the intake pressure. Further, the exhaust gas recirculation ratio is calculated using the theoretical intake air amount and the detected or estimated actual intake air amount, and the engine is controlled using the calculated exhaust gas recirculation ratio. Accordingly, it is not necessary for calculating the exhaust gas recirculation ratio to previously set many maps corresponding to various engine operating conditions, which can greatly reduce the man power for setting the maps. Further, even if the atmospheric pressure changes, the correcting calculation for the change in the atmospheric pressure is not necessary, which makes it possible to calculate the exhaust gas recirculation ratio simply and accurately.

Preferably, the control system further comprises ignition timing control means which includes optimum ignition timing calculating means for calculating an optimum ignition timing (IGMBT) at which an output of the engine becomes maximum, according to the exhaust gas recirculation ratio (REGRT), and controls an ignition timing of the engine using the optimum ignition timing (IGMBT).

With this configuration, the optimum ignition timing is calculated according to the exhaust gas recirculation ratio, and the ignition timing is controlled using the calculated optimum ignition timing. It is confirmed that the relationship between the exhaust gas recirculation ratio and the optimum ignition timing is not affected by the operating phase of the intake valve or whether the external exhaust gas recirculation is performed or not. Accordingly, by setting the optimum ignition timing according to the exhaust gas recirculation ratio, the optimum ignition timing suitable for the engine operating condition can easily be calculated.

Preferably, the ignition timing control means includes knock limit ignition timing calculating means for calculating a knock limit ignition timing (IGKNOCK), which corresponds to an occurrence limit of knocking in the engine, according to the exhaust gas recirculation ratio (REGRT), and performs the ignition timing control using any one of the optimum ignition timing (IGMBT) and the knock limit ignition timing (IGKNOCK) which is set to a more retarded value.

With this configuration, the knock limit ignition timing is calculated according to the exhaust gas recirculation ratio. The knock limit ignition timing is highly correlated with the exhaust gas recirculation ratio. Accordingly, calculating the knock limit ignition timing according to the exhaust gas recirculation ratio, makes it possible to perform the ignition timing control with high accuracy. Therefore, the engine output is maximized within the range for surely avoiding the knocking.

Preferably, the engine is provided with an intake valve operating characteristic varying mechanism (42) which changes an operating phase (CAIN) of the intake valve, and the ignition timing control means includes correcting means for correcting the knock limit ignition timing (IGKNOCK) according to the operating phase (CAIN) of the intake valve.

With this configuration, the knock limit ignition timing is corrected according to the operating phase of the intake valve. Accordingly, an accurate value of the knock limit ignition timing can be obtained for the engine in which the operating phase of the intake valve is changed according to the engine operation condition.

Preferably, the correcting means calculates an effective compression ratio (CMPR) of the engine according to the operating phase (CAIN) of the intake valve, and corrects the knock limit ignition timing (IGKNOCK) according to the effective compression ratio (CMPR).

With this configuration, the effective compression ratio of the engine is calculated according to the operating phase of the intake valve, and the knock limit ignition timing is corrected according to the effective compression ratio. The knock limit ignition timing changes depending on the effective compression ratio. Therefore, the knock limit ignition timing can appropriately be corrected by calculating the effective compression ratio of the engine according to the operating phase of the intake valve, and correcting the knock limit ignition timing according to the effective compression ratio.

Preferably, the control system further comprises throttle valve opening detecting means for detecting an opening (TH) of the throttle valve, and effective opening calculating means for calculating an effective opening (THEFCT) of the throttle valve according to the engine rotational speed. The effective opening (THEFCT) is a throttle valve opening at which an increasing rate of the intake pressure (PBA) with respect to an increase in the throttle valve opening becomes equal to or lower than a predetermined increasing rate. Further, the exhaust gas recirculation ratio calculating means sets the exhaust gas recirculation ratio (REGRT) to "0" when the throttle valve opening (TH) is equal to or greater than the effective opening (THEFCT).

With this configuration, the effective opening of the throttle valve is calculated according to the engine rotational speed, and the exhaust gas recirculation ratio is set to "0" when the throttle valve opening is equal to or greater than the effective opening. When performing a rapid acceleration in which the throttle valve opening rapidly increases from a low engine speed condition, the increase in the amount of air actually supplied to the cylinder delays from the increase in the intake pressure. Therefore, if calculating the exhaust gas recirculation ratio using the actual intake air amount and the theoretical intake air amount (which is calculated according to the intake pressure), the calculation error becomes large. When the throttle valve opening is equal to or greater than the effective opening, the actual exhaust gas recirculation ratio substantially becomes "0". Accordingly, the actual exhaust gas recirculation ratio can be approximated more accurately by setting the exhaust gas recirculation ratio to "0". Consequently, performing the engine control (ignition timing control and fuel supply amount control) using thus calculated exhaust gas recirculation ratio makes it possible to prevent unsuitable control during the transient operating condition of rapid acceleration, thereby preventing occurrence of knocking or deterioration of the exhaust gas characteristic.

BRIEF DESCRIPTION OF THE DRAWINGS

FIG. 1 shows a configuration of an internal combustion engine according to one embodiment of the present invention and a control system therefor.

FIG. 2 is a diagram showing a configuration of a valve operating characteristic varying device shown in FIG. 1.

FIG. 3 shows changes in the operating phase of the intake valve.

FIG. 4 is a graph for illustrating a calculation method of the total exhaust gas recirculation ratio (REGRT).

FIG. 5 is a graph for illustrating changes in the theoretical wide-open air amount (GAWOT) corresponding to changes in the atmospheric pressure.

FIG. 6 is a graph for illustrating a correction according to the intake air temperature.

FIG. 7 show a relationship between the total exhaust gas recirculation ratio (REGRT) and the optimum ignition timing (IGMBT).

FIG. 8 shows changes in the mass combustion rate (RCMB).

FIG. 9 shows a relationship between the total exhaust gas recirculation ratio (REGRT) and an EGR knocking correction amount (DEGRT).

FIG. 10 is a flowchart of a process for calculating the total exhaust gas recirculation ratio (first embodiment).

FIG. 11 is a flowchart of a process for calculating the ignition timing (IGLOG).

FIG. 12 is a flowchart of the IGKNOCK calculation process executed in the process of FIG. 11.

FIG. 13 shows graphs for illustrating the table and the map which are referred to in the process of FIG. 12.

FIG. 14 shows graphs for illustrating a calculation method of the effective compression ratio (CMPR).

FIG. 15 shows time charts for illustrating the problem in the first embodiment.

FIG. 16 shows a graph for illustrating the effective throttle valve opening (THEFCT).

FIG. 17 is a flowchart of a process for calculating the total exhaust gas recirculation ratio (second embodiment).

FIG. 18 shows a table referred to in the process of FIG. 17.

MODE FOR CARRYING OUT THE INVENTION

Preferred embodiments of the present invention will now be described with reference to the drawings.

[First Embodiment]

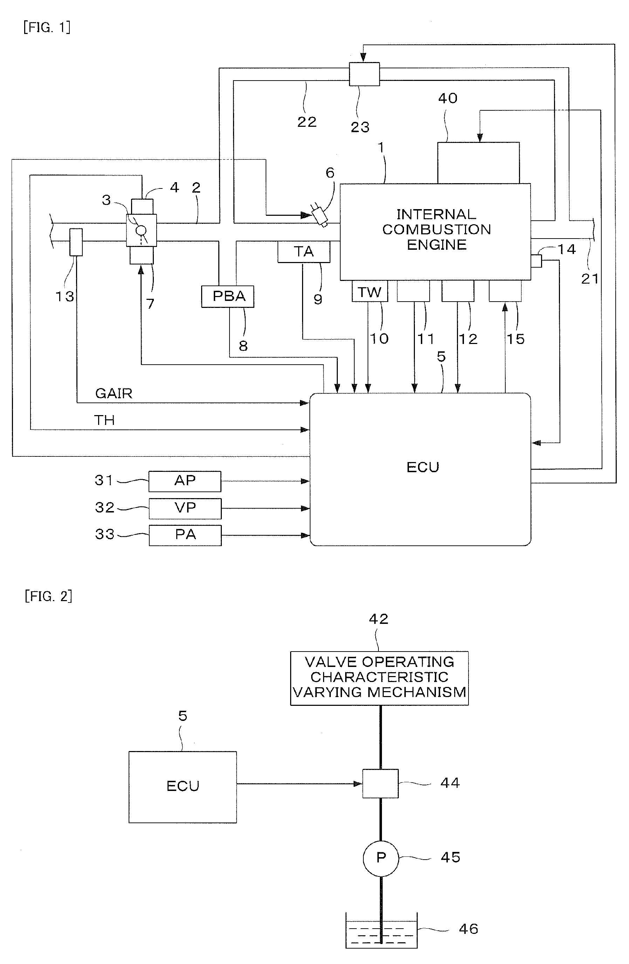

FIG. 1 is a schematic diagram showing a configuration of an internal combustion engine and a control system therefor according to one embodiment of the present invention. FIG. 2 is a schematic diagram showing a configuration of a valve operating characteristic varying device. Referring to FIG. 1, an internal combustion engine (hereinafter referred to as "engine") 1 having, for example, four cylinders is provided with intake valves, exhaust valves, and cams for driving the intake valves and the exhaust valves. The engine 1 is provided with a valve operating characteristic varying device 40 having a valve operating characteristic varying mechanism 42 as a cam phase varying mechanism for continuously varying the operating phase of the cams for driving the intake valves with reference to a rotational angle of the crank shaft of the engine 1. The valve operating characteristic varying mechanism 42 varies the operating phase of the cam for driving each intake valve, and consequently varies the operating phase of each intake valve.

The engine 1 has an intake pipe 2 provided with a throttle valve 3. A throttle valve opening sensor 4 for detecting an opening of the throttle valve 3 is connected to the throttle valve 3. The detection signal of the throttle valve opening sensor 4 is supplied to an electronic control unit (referred to as "ECU") 5. An actuator 7 for actuating the throttle valve 3 is connected to the throttle valve 3, and the operation of the actuator 7 is controlled by the ECU 5.

An exhaust gas recirculation passage 22 is disposed between an exhaust pipe 21 and the intake pipe 2, and connected to the intake pipe 2 downstream of the throttle valve 3. The exhaust gas recirculation passage 22 is provided with an exhaust gas recirculation control valve 23 for controlling a recirculation amount of exhaust gases. Operation of the exhaust gas recirculation control valve 23 is controlled by the ECU 5.

An intake air flow rate sensor 13 for detecting an intake air flow rate GAIR of the engine 1 is disposed in the intake pipe 2. The detection signal of the intake air flow rate sensor 13 is supplied to the ECU 5.

Fuel injection valves 6 are inserted into the intake pipe 2 at locations intermediate between the cylinder block of the engine 1 and the throttle valve 3 and slightly upstream of the respective intake valves (not shown). These fuel injection valves 6 are connected to a fuel pump (not shown), and electrically connected to the ECU 5. A valve opening period of each fuel injection valve 6 is controlled by a signal output from the ECU 5.

A spark plug 15 of each cylinder of the engine 1 is connected to the ECU 5. The ECU 5 supplies an ignition signal to each spark plug 15 and controls the ignition timing.

An intake pressure sensor 8 for detecting an intake pressure PBA and an intake air temperature sensor 9 for detecting an intake air temperature TA are disposed downstream of the throttle valve 3. Further, an engine coolant temperature sensor 10 for detecting an engine coolant temperature TW is mounted on the body of the engine 1. The detection signals from these sensors are supplied to the ECU 5.

A crank angle position sensor 11 and a cam angle position sensor 12 are connected to the ECU 5. The crank angle position sensor 11 is provided to detect a rotational angle of a crankshaft (not shown) of the engine 1, and the cam angle position sensor 12 is provided to detect a rotational angle of the camshaft to which the cams for driving the intake valves of the engine 1 are fixed. A signal corresponding to the rotational angle detected by the crank angle position sensor 11 and a signal corresponding to the rotational angle detected by the cam angle position sensor 12 are supplied to the ECU 5. The crank angle position sensor 11 generates one pulse (hereinafter referred to as "CRK pulse") at every constant crank angle period (e.g., a period of 30 degrees) and a pulse for specifying a predetermined angle position of the crankshaft. The cam angle position sensor 12 generates a pulse at a predetermined crank angle position for a specific cylinder of the engine 1 (this pulse will be hereinafter referred to as "CYL pulse"). The cam angle position sensor 12 further generates a pulse at a top dead center (TDC) starting the intake stroke in each cylinder (this pulse will be hereinafter referred to as "TDC pulse"). These pulses are used to control the various timings such as the fuel injection timing and the ignition timing, as well as to detect an engine rotational speed NE. An actual operating phase CAIN of the camshaft is detected based on the correlation between the TDC pulse output from the cam angle position sensor 12 and the CRK pulse output from the crank angle position sensor 11.

A knock sensor 14 for detecting a high frequency vibration is mounted on a proper position of the engine 1. The detection signal of the knock sensor 14 is supplied to the ECU 5. Further, an accelerator sensor 31, a vehicle speed sensor 32, and an atmospheric pressure sensor 33 are also connected to the ECU 5. The accelerator sensor 31 detects a depression amount AP of an accelerator pedal of the vehicle driven by the engine 1 (the depression amount will be hereinafter referred to as "accelerator operation amount"). The vehicle speed sensor 32 detects a running speed (vehicle speed) VP of the vehicle. The atmospheric pressure sensor 33 detects an atmospheric pressure PA. The detection signals from these sensors are supplied to the ECU 5.

The valve operating characteristic varying device 40, as shown in FIG. 2, includes a valve operating characteristic varying mechanism 42 and a solenoid valve 44. The valve operating characteristic varying mechanism 42 continuously varies an operating phase of each intake valve. An opening of the solenoid valve 44 is continuously varied to change the operating phase of each intake valve. The operating phase CAIN of the camshaft is used as a parameter indicative of the operating phase of the intake valve (hereinafter referred to as "intake valve operating phase CAIN"). A lubricating oil in an oil pan 46 is pressurized by an oil pump 45, and supplied to the solenoid valve 44. It is to be noted that a specific configuration of the valve operating characteristic varying mechanism 42 is described, for example, in Japanese Patent Laid-open No. 2000-227013.

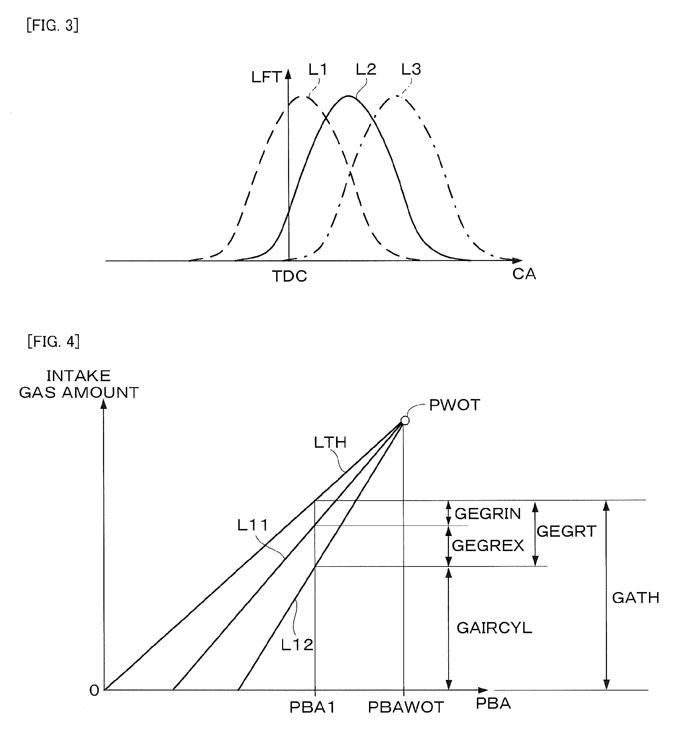

According to the valve operating characteristic varying mechanism 42, the intake valve is driven with a phase from the most advanced phase shown by the broken line L1 in FIG. 3 to the most retarded phase shown by the dot-and-dash line L3, depending on a change in the operating phase CAIN of the camshaft. In FIG. 3, the characteristic shown by the solid line L2 is the center of the variable phase range. In this embodiment, the intake valve operating phase CAIN is defined as an advancing angular amount from the most retarded phase.

The ECU 5 includes an input circuit having various functions including a function of shaping the waveforms of input signals from the various sensors, a function of correcting the voltage levels of the input signals to a predetermined level, and a function of converting analog signal values into digital signal values. The ECU5 further includes a central processing unit (hereinafter referred to as "CPU"), a memory circuit, and an output circuit. The memory circuit preliminarily stores various operating programs to be executed by the CPU and the results of computation or the like by the CPU. The output circuit supplies drive signals to the actuator 7, the fuel injection valves 6, the ignition plugs 15, the exhaust gas recirculation control valve 23, and the solenoid valve 44.

The CPU in the ECU 5 performs the ignition timing control, the opening control of the throttle valve 3, the control of an amount of fuel to be supplied to the engine 1 (the opening period of each fuel injection valve 6), the exhaust gas recirculation amount control with the exhaust gas recirculation control valve 23, and the valve operating characteristic control with the solenoid valve 44, according to the detection signals from the above-described sensors.

FIG. 4 is a graph for illustrating a calculation method of a total exhaust gas recirculation ratio (hereinafter referred to as "total EGR ratio") REGRT in this embodiment. FIG. 4 shows a relationship between the intake pressure PBA and an amount of gases supplied to the engine (an amount of air + an amount of recirculated exhaust gases). The relationship of FIG. 4 is obtained under the condition that the engine rotational speed NE and the intake valve operating phase CAIN are constant. The total EGR ratio REGRT is a ratio of the total exhaust gas recirculation amount with respect to the total intake gas amount (theoretical intake air amount GATH) (refer to the equation (2) described later). The total exhaust gas recirculation amount is a sum of the internal exhaust gas recirculation amount and the external exhaust gas recirculation amount through the exhaust gas recirculation passage 22.

In FIG. 4, the operating point PWOT corresponds to yhr state where the throttle valve 3 is fully opened, and indicates the theoretical operating point at which no external exhaust gas recirculation is performed, and no internal exhaust gas recirculation is performed. At the operating point PWOT, the intake air amount takes the maximum value under the condition that the engine rotational speed NE is constant. It is to be noted that the residual gas ratio (the internal exhaust gas recirculation ratio) does not actually become "0" in the state where the throttle valve 3 is fully opened. However, the internal exhaust gas recirculation ratio takes the minimum value, since the intake pressure PBAWOT becomes almost equal to the atmospheric pressure PA. The straight line LTH passing the operating point PWOT and the starting point, indicates a theoretical relationship between the intake air amount and the intake pressure, wherein no external exhaust gas recirculation and no internal exhaust gas recirculation is performed. This straight line LTH is hereinafter referred to as "theoretical intake air amount straight line LTH". The line L11 indicates a relationship corresponding to the state where only the internal exhaust gas recirculation is performed, and the line L12 indicates a relationship corresponding to the state where both of the internal exhaust gas recirculation and the external exhaust gas recirculation are performed. It is to be noted that the lines L11 and L12 are indicated as straight lines for explanation, although they are not actually straight lines.

If the gas amount on the theoretical intake air amount straight line LTH corresponding to the state where the intake pressure is equal to PBA1 is defined as a "theoretical intake air amount GATH", the theoretical intake air amount GATH is expressed with the following equation (1). In the equation (1), GAIRCYL indicates an intake air amount (fresh air amount), and GEGRIN, GEGREX, and GEGRT respectively indicate an internal exhaust gas recirculation amount, an external exhaust gas recirculation amount, and a total exhaust gas recirculation amount.

$$GATH = GAIRCYL + GEGRIN + GEGREX$$
$$= GAIRCYL + GEGRT \qquad (1)$$

Accordingly, the total EGR ratio REGRT is calculated by the following equation (2).

$$REGRT = GEGRT/GATH$$
$$= (GATH - GAIRCYL)/GATH \qquad (2)$$

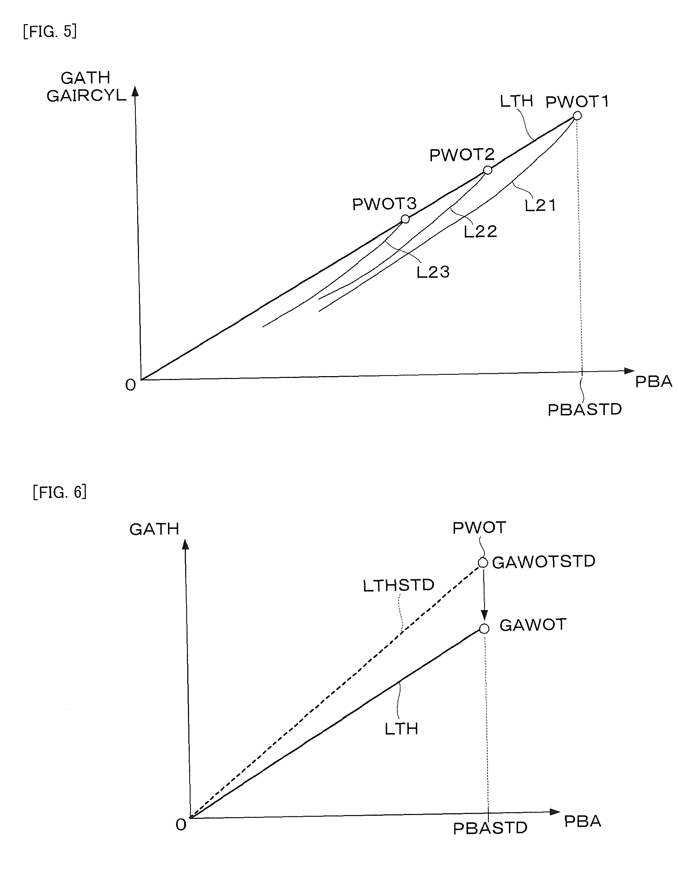

FIG. 5 is a graph for illustrating a case where the atmospheric pressure changes. In FIG. 5, the wide-open operating point PWOT1 is an operating point corresponding to a reference state in which the intake pressure PBA is equal to a reference intake pressure PBASTD (for example, 100 kPa (750 mmHg)). When the vehicle moves to a higher altitude place and the atmospheric pressure falls, the operating point PWOT1 moves to the operating point PWOT2 and next to the operating point PWOT3 on the theoretical intake air amount straight line LTH. The curves L21 - L23 starting from the operating points PWOT1 - PWOT3 respectively indicate the intake air amount GAIRCYL which is obtained by taking the internal exhaust gas recirculation into account (i.e., when no external exhaust gas recirculation is performed).

As described above, in this embodiment, it is not necessary to change the theoretical intake air amount straight line LTH depending on changes in the atmospheric pressure, and the total EGR ratio REGRT can accurately be calculated also at high altitude places.

However, it is necessary to perform an air density correction depending on changes in the intake air temperature TA, and the air density correction is performed according to the detected intake air temperature TA using the following equation (3). In the equation (3), TASTD is an intake air temperature in a reference condition (for example, 25 degrees C), and GAWOTSTD is an intake air amount corresponding to the wide-open operating point PWOT in the reference condition. GAWOTSTD is hereinafter referred to as "reference theoretical wide-open air amount GAWOTSTD". Further, GAWOT is an intake air amount corresponding to the wide-open operating point PWOT in the operating condition of the detected intake air temperature TA. GAWOT is hereinafter referred to as "theoretical wide-open air amount GAWOT".

"n" in the equation (3) is a constant which is empirically set to a value from "0" to "1", for example, set to "0.5".

[Eq. 1]

$$GAWOT = GAWOTSTD \times \left( \frac{TASTD + 273}{TA + 273} \right)^n \qquad (3)$$

The straight line LTHSTD shown in FIG. 6 is a theoretical intake air amount straight line in the reference condition, and the straight line LTH is a theoretical intake air amount straight line corresponding to the detected intake air temperature TA. It is to be noted that FIG. 6 corresponds to an example in which the detected intake air temperature TA is higher than the reference intake air temperature TASTD.

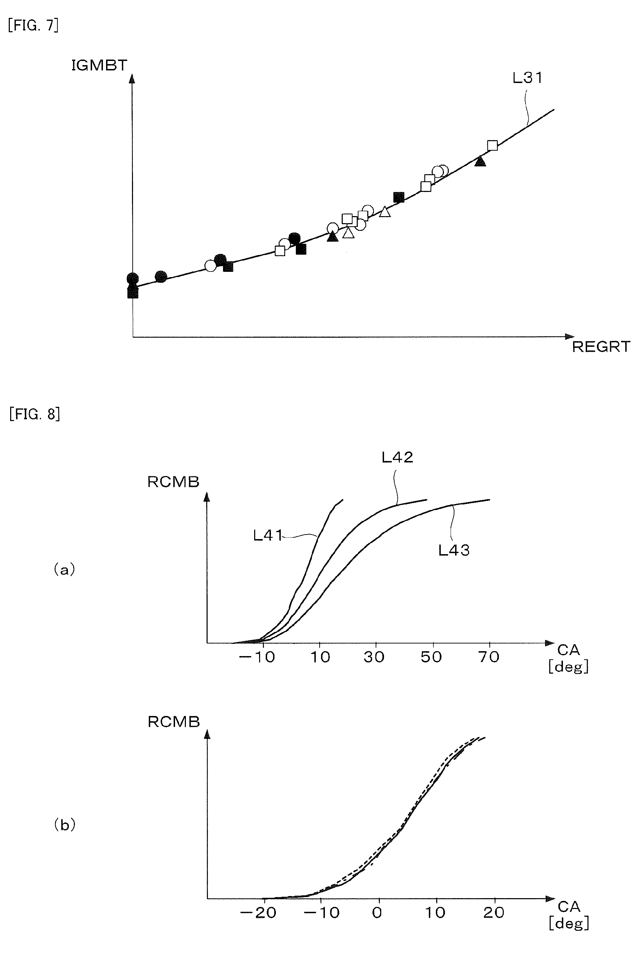

FIG. 7 is a graph for illustrating a relationship between the total EGR ratio REGRT and an optimum ignition timing IGMBT (the engine rotational speed NE is fixed). The optimum ignition timing IGMBT is an ignition timing at which the engine output torque becomes the maximum. In FIG.7, the black circles (●) and the white circles (O) correspond to an operating condition where the intake valve operating phase CAIN is "0" □degree, the black squares (■) and the white squares (□) correspond to an operating condition where the intake valve operating phase CAIN is "20" degrees, and the black triangles (▲) and the white triangles (△) correspond to an operating condition where the intake valve operating phase CAIN is "45" degrees. Further, the black symbols (●, ■, and ▲) correspond to the case where no external exhaust gas recirculation is performed (only the internal exhaust gas recirculation is performed), and the white symbols (O, □, and △) correspond to the case where the external exhaust gas recirculation is performed (both of the internal exhaust gas recirculation and the external exhaust gas recirculation are performed).

According to FIG. 7, it is confirmed that the relationship between the total EGR ratio REGRT and the optimum ignition timing IGMBT depends neither on the operating phase CAIN of the intake valve nor on whether the external exhaust gas recirculation is performed or not, i.e., the curve L31 can represent the relationship between REGRT and IGMBT. Accordingly, only one optimum ignition timing calculation map (IGMBT map) set according to the engine rotational speed NE and the total EGR ratio REGRT, makes it possible to set the optimum ignition timing corresponding to all engine operating conditions. Consequently, the manpower for setting maps can greatly be reduced.

FIG. 8 shows changes in the mass combustion rate RCMB of the air-fuel mixture sucked in the combustion chamber (the horizontal axis indicates the crank angle CA). FIG. 8(a) shows changes in the mass combustion rate RCMB in a condition where the charging efficiency $\eta$ c is constant and the total EGR ratio REGRT is changed. Specifically, the curves L41 - L43 correspond respectively to operating conditions in which the total EGR ratio REGRT is set to "6.3 %", "16.2 %, and "26.3 %". The curve L41 indicates the fastest burning speed. That is, it is confirmed that the total EGR ratio REGRT is a main factor which changes the burning speed of the air-fuel mixture.

On the other hand, FIG. 8(b) shows changes in the mass combustion rate RCMB in a condition where the total EGR ratio REGRT is constant and the charging efficiency $\eta$ c is changed (the solid line, the dashed line, and the dot-and-dash line). The three lines indicated in FIG. 8(b) almost overlap with each other, which shows that the burning speed of the air-fuel mixture hardly changes even if the charging efficiency $\eta$ c is changed. Therefore, it is preferable that the optimum ignition timing IGMBT is set not according to the charging efficiency $\eta$ c (the fresh intake air amount) but according to the total EGR ratio REGRT.

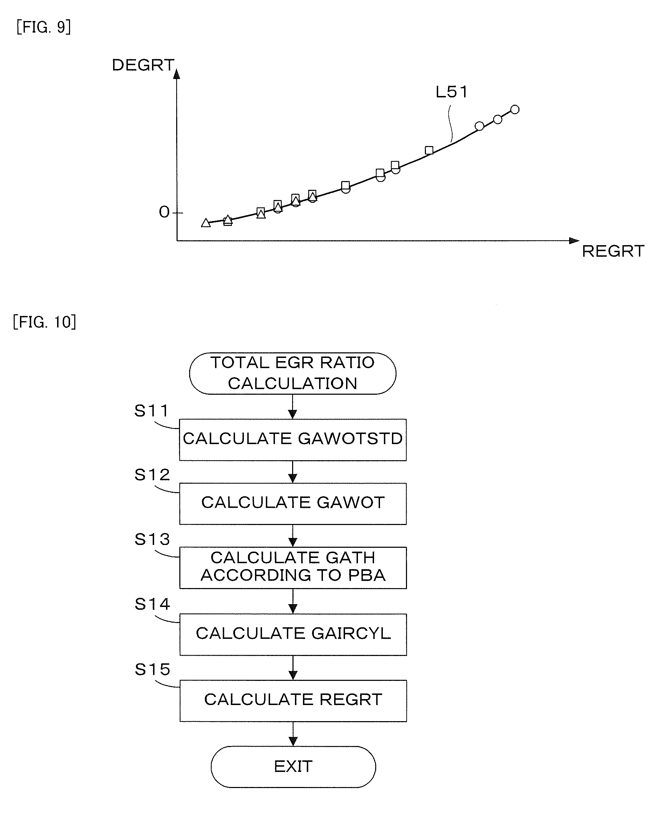

FIG. 9 shows a relationship between the total EGR ratio REGRT and an EGR knock correction amount DEGRT of the ignition timing (the engine rotational speed NE is fixed). The EGR knock correction amount DEGRT is an ignition timing correction amount (a correction amount in the advancing direction) applied to a calculation of a knock limit ignition timing IGKNOCK, in order to perform the correction corresponding to changes in the exhaust gas recirculation amount. The knock limit ignition timing IGKNOCK corresponds to an occurrence limit of knocking in the engine, i.e., the most advanced ignition timing at which no knocking occurs. The symbols O, □, and △ in FIG. 9 indicate data corresponding to three different charging efficiencies $\eta$ c, and it is confirmed that the relationship does not depend on the charging efficiency $\eta$ c. Accordingly, the curve L51 can represent the relationship between the total EGR ratio REGRT and the EGR knock correction amount DEGRT under the condition that the engine rotational speed NE is fixed. Therefore, the EGR knock correction amount DEGRT can appropriately be set by using the DEGRT map which is set according to the engine rotational speed NE and the total EGR ratio REGRT. It is to be noted that a modification according to the intake valve operating phase CAIN may be necessary due to differences in the engine characteristics, although the relationship indicated with the curve L51 is basically independent of the intake valve operating phase CAIN. In such case, two or more tables corresponding to different intake valve operating phases CAIN may be used, or the correction according to the intake valve operating phase CAIN may be performed.

FIG. 10 is a flowchart of a process for calculating the total EGR ratio REGRT. This process is executed by the CPU in the ECU 5 in synchronism with generation of the TDC pulse.

In step S11, a GAWOTSTD map which is set according to the engine rotational speed NE and the intake valve operating phase CAIN, is retrieved to calculate the reference theoretical wide-open air amount GAWOTSTD. In step S12, the correction according to the intake air temperature TA with the above-described equation (3) is performed to calculate the theoretical wide-open air amount GAWOT.

In step S 13, the detected intake pressure PBA is applied to the following equation (4) to calculate the theoretical intake air amount GATH.

$$GATH = GAWOT \times PBA/PBASTD \qquad (4)$$

In step S14, the detected intake air flow rate GAIR [g/sec] is applied to the following equation (5) to perform the conversion to the the intake air amount GAIRCYL in one intake stroke of one cylinder. KC in the equation (5) is a conversion coefficient.

$$GAIRCYL = GAIR \times KC/NE \qquad (5)$$

In step S15, the total EGR ratio REGRT is calculated by the above-described equation (2).

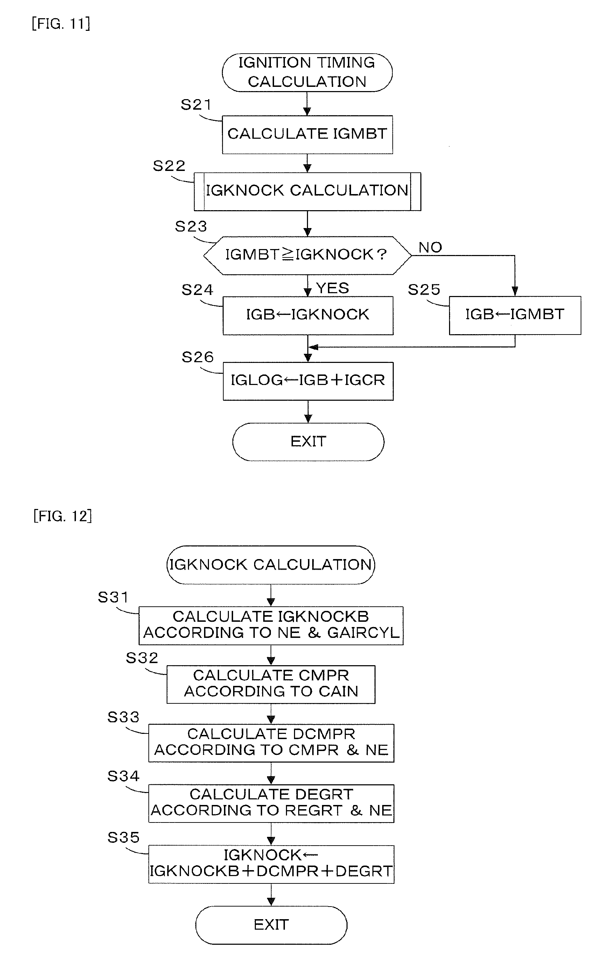

FIG. 11 is a flowchart of a process for calculating the ignition timing IGLOG indicated by an advance angular amount from the compression top dead center. This process is executed by the CPU in the ECU 5 in synchronism with generation of the TDC pulse.

In step S21, an IGMBT map (refer to FIG. 7) is retrieve according to the engine rotational speed NE and the total EGR ratio REGRT to calculate the optimum ignition timing IGMBT. In step S22, the IGKNOCK calculation process shown in FIG. 12 is executed to calculate the knock limit ignition timing IGKNOCK.

In step S23, it is determined whether or not the optimum ignition timing IGMBT is equal to or greater than the knock limit ignition timing IGKNOCK. If the answer to step S23 is affirmative (YES), a basic ignition timing IGB is set to the knock limit ignition timing IGKNOCK (step S24). If the optimum ignition timing IGMBT is less than the knock limit ignition timing IGKNOCK, the basic ignition timing IGB is set to the optimum ignition timing IGMBT (step S25).

In step S26, the ignition timing IGLOG is calculated by adding the basic ignition timing IGB and a correction value IGCR which is for example calculated according to the engine coolant temperature TW.

The CPU in the ECU 5 performs the ignition with the ignition plug 15 in accordance with the calculated ignition timing IGLOG.

FIG. 12 is a flowchart of the IGKNOCK calculation process executed in step S22 of FIG. 11.

In step S31, an IGKNOCKB map is retrieved according to the engine rotational speed NE and the intake air amount GAIRCYL to calculate a basic knock limit ignition timing IGKNOCKB. The IGKNOCKB map is set corresponding to the state where the total EGR ratio REGRT is set to a predetermined reference value and the intake valve operating phase CAIN is set to "0 degree".

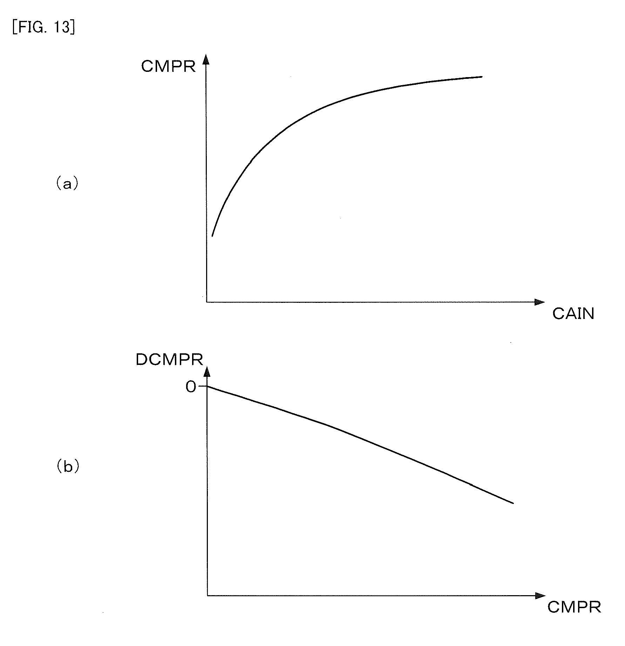

In step S32, a CMPR table shown in FIG. 13(a) is retrieved according to the intake valve operating phase CAIN to calculate the effective compression ratio CMPR. The intake valve closing timing CACL changes depending on the intake valve operating phase CAIN, which accordingly changes the effective compression ratio CMPR. The relationship between the intake valve operating phase CAIN and the effective compression ratio CMPR which is previously calculated, is set in the CMPR table.

In step S33, a DCMPR map is retrieved according to the effective compression ratio CMPR and the engine rotational speed NE to calculate a compression ratio knock correction amount DCMPR. The compression ratio knock correction amount DCMPR takes a value which is equal to or less than "0", and is set so as to decrease as the effective compression ratio CMPR increases, as shown in FIG. 13(b).

In step S34, a DEGRT map is retrieved according to the total EGR ratio REGRT and the engine rotational speed NE to calculate the EGR knock correction amount DEGRT. The EGR knock correction amount DEGRT takes a value which is greater than "0", and is set so as to increase as the total EGR ratio REGRT increases, as shown in FIG. 9.

In step S35, the basic knock limit ignition timing IGKNOCKB, the compression ratio knock correction amount DCMPR, and the EGR knock correction amount DEGRT are applied to the following equation (6) to calculate the knock limit ignition timing IGKNOCK.

$$IGKNOCK = IGKNOCKB + DCMPR + DEGRT \qquad (6)$$

It is to be noted that in this embodiment, the valve opening time period of the fuel injection valve 6, i.e., the fuel injection amount TOUT, is also calculated using the total EGR ratio REGRT.
Further, the knock limit ignition timing IGKNOCK is modified according to the detection result of knocking by the knock sensor 14. This modification process is omitted in FIG. 12.

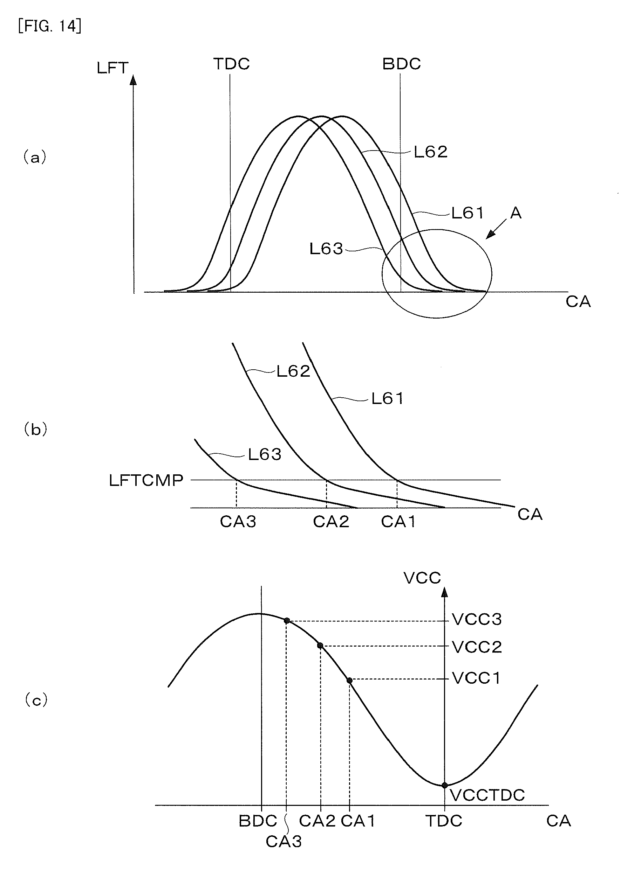

FIG. 14 shows graphs for explaining the method of calculating the effective compression ratio CMPR. FIG. 14 (a) shows a lift curve of the intake valve, and FIG. 14(b) shows the A section in FIG. 14(a), i.e., an expanded view of the lift curve in the vicinity of the valve closing timing. Crank angles CA1, CA2, and CA3 at which the lift amount LFT is equal to a predetermined lift amount threshold value LFTCMP (which is set to a lift amount a little greater than "0") are calculated corresponding to the lift curves L61, L62, and L63 of FIGs. 14(a) and 14(b), and cylinder volumes VCC1, VCC2, and VCC3 which correspond respectively to the piston positions corresponding to the crank angles CA1, CA2, and CA3 as shown in FIG. 14(c), are calculated. The effective compression ratios CMPR1, CMPR2, and CMPR3 corresponding to the lift curves L61 - L63 are calculated by the following equations (7) - (9). VCCTDC in these equations is a cylinder volume when the piston is positioned at the top dead center.

$$CMPR1 = VCC1/VCCTDC \qquad (7)$$

$$CMPR2 = VCC2/VCCTDC \qquad (8)$$

$$CMPR3 = VCC3/VCCTDC \qquad (9)$$

In this embodiment as described above, the theoretical wide-open intake air amount GAWOT, which is an intake air amount corresponding to the state where the throttle valve 3 is fully opened, is calculated according to the intake valve operating phase CAIN and the engine rotational speed, and the theoretical intake air amount GATH, which is an intake air amount corresponding to the state where the exhaust gas recirculation amount is equal to "0", is calculated according to the theoretical wide-open intake air amount GAWOT and the intake pressure PBA. Further, the total exhaust gas recirculation ratio REGRT is calculated using the detected intake air amount GAIRCYL and the theoretical intake air amount GATH. Accordingly, it is not necessary for calculating the exhaust gas recirculation ratio to previously set many maps corresponding to various engine operating conditions, which can greatly reduce the man power for setting the maps. Further, even if the atmospheric pressure changes, the correcting calculation for the change in the atmospheric pressure is not necessary, which makes it possible to calculate the exhaust gas recirculation ratio simply and accurately.

Further, the optimum ignition timing IGMBT is calculated according to the total exhaust gas recirculation ratio REGRT. Accordingly, in addition to the external exhaust gas recirculation, the internal exhaust gas recirculation is also taken into account, thereby obtaining the optimum ignition timing IGMBT with high accuracy. It is confirmed that the relationship between the total exhaust gas recirculation ratio REGRT and the optimum ignition timing IGMBT is not affected by the intake valve operating phase CAIN or whether the external exhaust gas recirculation is performed or not (refer to FIG. 7). Accordingly, by setting the optimum ignition timing IGMBT according to the total exhaust gas recirculation ratio REGRT, the optimum ignition timing IGMBT suitable for the engine operating condition can easily be calculated. Further, by performing the ignition timing control using the calculated optimum ignition timing IGMBT, the output performance of the engine can sufficiently be effected.

Further, the EGR knocking correction amount DEGRT is calculated according to the total EGR ratio REGRT, and the knock limit ignition timing IGKNOCK is calculated by correcting the basic knock limit ignition timing IGKNOCKB with the EGR knocking correction amount DEGRT. The knock limit ignition timing IGKNOCK is highly correlated with the total EGR ratio REGRT (refer to FIG. 9). Therefore, performing the correction with the EGR knocking correction amount DEGRT calculated according to the total EGR ratio REGRT makes it possible to perform the ignition timing control with high accuracy, wherein the engine output is maximized within the range for surely avoiding the knocking.

Further, the compression ratio correction amount DCMPR is calculated according to the intake valve operating phase CAIN, and the basic knock limit ignition timing IGKNOCKB is corrected with the compression ratio correction amount DCMPR. Therefore, an accurate value of the knock limit ignition timing IGKNOCK can be obtained when changing the intake valve operating phase CAIN according to the engine operating condition.

Specifically, the effective compression ratio CMPR is calculated according to the intake valve operating phase CAIN, and the compression ratio correction amount DCMPR is calculated according to the effective compression ratio CMPR. The knock limit ignition timing IGKNOCK changes depending on the effective compression ratio CMPR. Therefore, the correction of the knock limit ignition timing IGKNOCK can appropriately be performed by calculating the effective compression ratio CMPR according to the intake valve operating phase CAIN, and correcting the basic knock limit ignition timing IGKNOCKB according to the effective compression ratio CMPR.

In this embodiment, the crank angle position sensor 11 and the intake pressure sensor 8 correspond respectively to the rotational speed detecting means and the intake pressure detecting means, the valve operating characteristic varying mechanism 42 corresponds to the intake valve operating phase varying mechanism, and the intake air flow rate sensor 13 corresponds to the intake air amount obtaining means. Further, the ECU 5 constitutes the wide-open intake air amount calculating means, the theoretical intake air amount calculating means, the exhaust gas recirculation ratio calculating means, the optimum ignition timing calculating means, the knock limit ignition timing calculating means, and the correcting means. Specifically steps S11 and S12 of FIG. 10 correspond to the wide-open intake air amount calculating means, step S13 corresponds to the theoretical intake air amount calculating means, step S15 corresponds to the exhaust gas recirculation ratio calculating means, step S21 of FIG. 11 corresponds to the optimum ignition timing calculating means, the process of FIG. 12 corresponds to the knock limit ignition timing calculating means, and steps S32, S33, and S35 correspond to the correcting means.

[Second Embodiment]

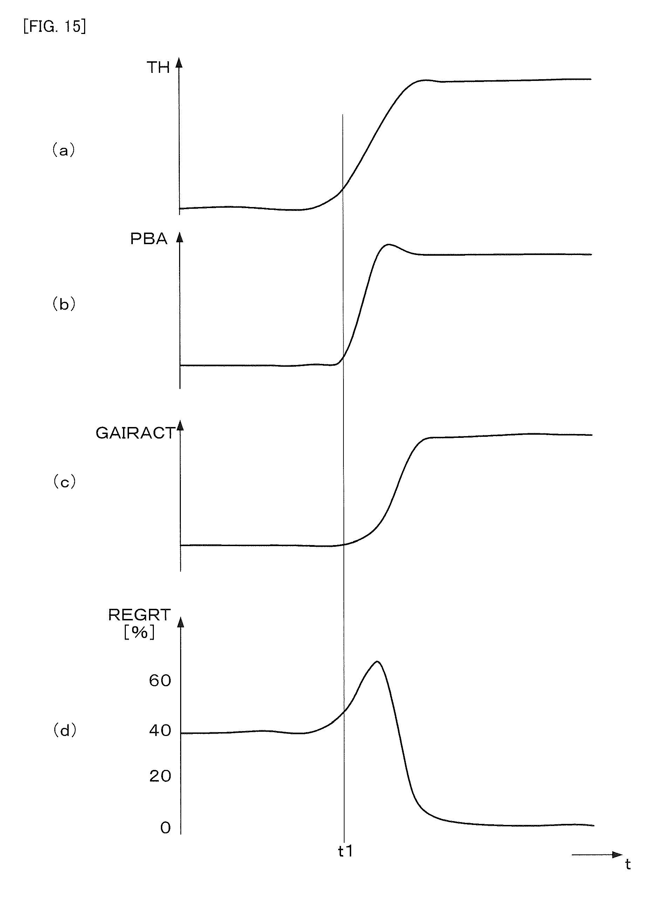

The total EGR ratio REGRT calculated in the process shown in FIG. 10 accurately coincides with the actual total exhaust gas recirculation ratio, when the changing speed of the throttle valve opening TH is comparatively low. However, in the transient operating condition where the increasing speed of the throttle valve opening TH is high (hereinafter referred to as "rapid acceleration operating condition"), there is a problem that the calculation accuracy is reduced due to a delay of change in the amount GAIRACT of air actually sucked into the cylinder. FIG. 15 shows time charts for illustrating this problem. In FIG. 15, changes in the throttle valve opening TH, the intake pressure PBA, the actual intake air amount GAIRACT, and the calculated total EGR ratio REGRT, are shown when the engine operating condition changes from a low speed condition in which the engine rotational speed NE is comparatively low (e.g., 700 rpm) to the rapid acceleration operating condition.

As apparent by referring to FIGs. 15(a) - 15(c), the increase in the intake pressure PBA delays from the increase in the throttle valve opening TH , and the increase in the actual intake air amount GAIRACT further delays from the increase in the intake pressure PBA. Therefore, the total EGR ratio REGRT calculated using the intake pressure PBA and the detected intake air flow rate GAIR increases to about 60% (FIG. 15 (d)) although the actual total EGR ratio in the rapid acceleration operating condition decreases from the value before the acceleration starts. Consequently, the ignition timing IGLOG calculated using the total EGR ratio REGRT is greatly advanced from the desired value, which causes a knocking.

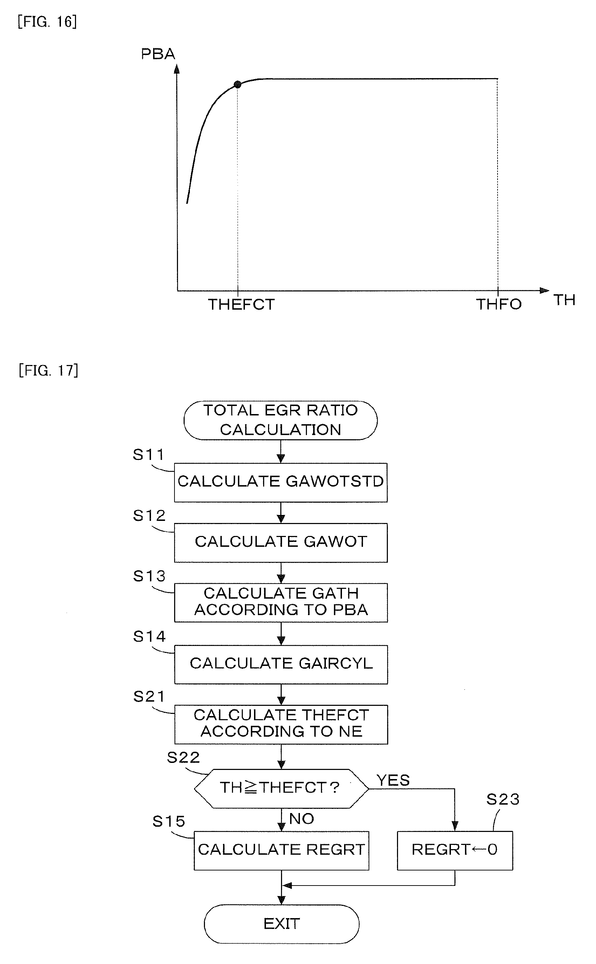

Therefore in this embodiment, the total EGR ratio REGRT is set to "0" when the throttle valve opening TH is equal to or greater than the effective throttle valve opening THEFCT. The effective throttle valve opening THEFCT is a throttle valve opening at which the intake pressure PBA hardly increases in response to the increase in the throttle valve opening TH, i.e., the throttle valve opening at which the increasing rate (dPBA/dTH) of the intake pressure PBA with respect to the increase in the throttle valve opening TH becomes equal to or less than a predetermined increasing rate under the condition where the engine rotational speed is fixed. For example, FIG. 16 shows the relationship between the throttle valve opening TH and the intake pressure PBA when the engine rotational speed is 700 rpm. THEFCT and THFO in FIG. 16 respectively correspond to the effective throttle valve opening and the fully-opened opening. Since the intake pressure PBA saturates at a comparatively low opening when the engine rotational speed is low, the effective throttle valve opening THEFCT takes a comparatively small value (for example, about 15% - 20% of the fully-opened opening THFO).

By setting the total EGR ratio REGRT to "0" when the throttle valve opening TH is equal to or greater than the effective throttle valve opening THEFCT, the total EGR ratio REGRT is set to "0" in the vicinity of time t1 of FIG. 15. Accordingly, the above-described problem can be solved.

FIG. 17 is a flowchart of the total EGR ratio calculation process in this embodiment. This process is obtained by adding steps S21 - S23 to the process of FIG. 10.

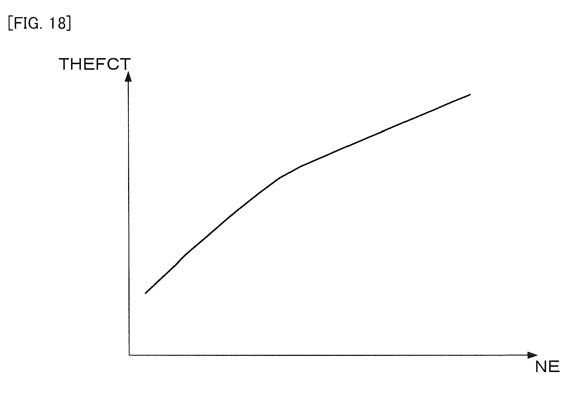

In step S21, a THEFCT table shown in FIG. 18 is retrieved according to the engine rotational speed NE to calculate the effective throttle valve opening THEFCT. The THEFCT table is set so that the effective throttle valve opening THEFCT increases as the engine rotational speed NE increases.

In step S22, it is determined whether or not the throttle valve opening TH is equal to or greater than the effective throttle valve opening THEFCT. If the answer to step S22 is affirmative (YES), the engine 1 is determined to be in the rapid acceleration operating condition, and the total EGR ratio REGRT is set to "0" (step S23). If the answer to step S22 is negative (NO), i.e., the throttle valve opening TH is less than the effective throttle valve opening THEFCT, the process proceeds to step S15 to calculate the total EGR ratio REGRT using the equation (2).

As described above, in this embodiment, the effective throttle valve opening THEFCT is calculated according to the engine rotational speed NE, and the total EGR ratio REGRT is set to "0" when the throttle valve opening TH is equal to or greater than the effective opening THEFCT. When performing the rapid acceleration in which the throttle valve opening TH rapidly increases from a low engine speed condition, the increase in the amount of air actually supplied to the cylinder delays from the increase in the intake pressure PBA (refer to FIG. 15). Therefore, if calculating the total EGR ratio using the actual intake air amount GAIRCYL and the theoretical intake air amount GATH which is calculated according to the intake pressure PBA, the calculation error becomes large. When the throttle valve opening TH is equal to or greater than the effective throttle valve opening THEFCT, the actual exhaust gas recirculation ratio substantially becomes "0". Accordingly, the actual exhaust gas recirculation ratio can be approximated more accurately by setting the total EGR ratio REGRT to "0". Consequently, performing the ignition timing control and the fuel supply amount control using the total EGR ratio REGRT makes it possible to prevent unsuitable control during the transient operating condition of rapid acceleration, thereby preventing occurrence of knocking or deterioration of the exhaust gas characteristic.

In this embodiment, the throttle valve opening sensor 4 corresponds to the throttle valve opening detecting means, step S21 of FIG. 17 corresponds to the effective opening calculating means, and steps S 15, S22, and S23 correspond to the exhaust gas recirculation ratio calculating means.

The present invention is not limited to the embodiments described above, and various modifications may be made. For example, the total EGR ratio REGRT is calculated using the intake air flow rate GAIR detected by the intake air flow rate sensor 13 in the above-described embodiments. Alternatively, an estimated intake air flow rate HGAIR may be calculated according to the throttle valve opening TH, the atmospheric pressure PA, and the intake pressure PBA, and the total EGR ratio REGRT may be calculated using the estimated intake air flow rate HGAIR.

Further, in the above-described embodiments, an example in which the present invention is applied to controlling the internal combustion engine wherein the external exhaust gas recirculation through the exhaust gas recirculation passage 22 is performed. The present invention is applicable also to controlling the internal combustion engine wherein no external exhaust gas recirculation is performed (only the internal exhaust gas recirculation is performed).

Further, in the above-described embodiments, the effective compression ratio CMPR is calculated according to the intake valve operating phase CAIN, and the compression ratio knock correction amount DCMPR is calculated according to the effective compression ratio CMPR. Alternatively, the compression ratio knock correction amount DCMPR may directly be calculated according to the intake valve operating phase CAIN.

Further, the present invention can also be applied to controlling a watercraft propulsion engine such as an outboard engine having a vertically extending crankshaft. Description of reference numerals

    1 Internal combustion engine
    2 Intake pipe
    3 Throttle valve
    4 Throttle valve opening sensor (throttle valve opening detecting means)
    5 Electronic control unit (wide-open intake air amount calculating means, theoretical intake air amount calculating means, exhaust gas recirculation ratio calculating means, optimum ignition timing calculating means, knock limit ignition timing calculating means, correction means, effective opening calculating means)
    8 Intake pressure sensor (intake pressure detecting means)
    11 Crank angle position sensor (rotational speed detecting means)
    13 Intake air flow rate sensor (intake air amount obtaining means)
    42 Valve operating characteristic varying mechanism (intake valve operating phase varying mechanism)

**Claims**

1. A control system for an internal combustion engine having a throttle valve disposed in an intake passage of said engine, said control system being **characterized by** comprising:

    rotational speed detecting means for detecting an rotational speed of said engine;
    intake pressure detecting means for detecting an intake pressure of said engine;
    wide-open intake air amount calculating means for calculating a wide-open intake air amount according to the engine rotational speed, the wide-open intake air amount being an intake air amount corresponding to a state where said throttle valve is fully opened;

theoretical intake air amount calculating means for calculating a theoretical intake air amount according to the wide-open intake air amount and the intake pressure, the theoretical intake air amount being an intake air amount corresponding to a state where no exhaust gas of said engine is recirculated to a combustion chamber of said engine;

intake air amount obtaining means for detecting or estimating an actual intake air amount of said engine; and exhaust gas recirculation ratio calculating means for calculating an exhaust gas recirculation ratio using the theoretical intake air amount and the actual intake air amount;

wherein said engine is controlled using the exhaust gas recirculation ratio.

2. A control system according to claim 1, further comprising ignition timing control means which includes optimum ignition timing calculating means for calculating an optimum ignition timing at which an output of said engine becomes maximum, according to the exhaust gas recirculation ratio, and controls an ignition timing of said engine using the optimum ignition timing.

3. A control system according to claim 2, wherein said ignition timing control means includes knock limit ignition timing calculating means for calculating a knock limit ignition timing according to the exhaust gas recirculation ratio, and performs the ignition timing control using any one of the optimum ignition timing and the knock limit ignition timing which is set to a more retarded value,

wherein the knock limit ignition timing corresponds to an occurrence limit of knocking in said engine.

4. A control system according to claim 3, wherein said engine is provided with an intake valve operating characteristic varying mechanism which changes an operating phase of the intake valve, and said ignition timing control means includes correcting means for correcting the knock limit ignition timing according to the operating phase of the intake valve.

5. A control system according to claim 4, wherein said correcting means calculates an effective compression ratio of said engine according to the operating phase of the intake valve, and corrects the knock limit ignition timing according to the effective compression ratio.

6. A control system according to any one of claims 1 to 5, further comprising:

throttle valve opening detecting means for detecting an opening of said throttle valve; and effective opening calculating means for calculating an effective opening of said throttle valve according to the engine rotational speed, the effective opening being an throttle valve opening at which an increasing rate of the intake pressure with respect to an increase in the throttle valve opening becomes equal to or lower than a predetermined increasing rate,

wherein said exhaust gas recirculation ratio calculating means sets the exhaust gas recirculation ratio to "0" when the throttle valve opening is equal to or greater than the effective opening.

7. A control method for an internal combustion engine having a throttle valve disposed in an intake passage of said engine, said control method being **characterized by** comprising the steps of:

a) detecting an rotational speed of said engine;
b) detecting an intake pressure of said engine;
c) calculating a wide-open intake air amount according to the engine rotational speed, the wide-open intake air amount being an intake air amount corresponding to a state where said throttle valve is fully opened;
d) calculating a theoretical intake air amount according to the wide-open intake air amount and the intake pressure, the theoretical intake air amount being an intake air amount corresponding to a state where no exhaust gas of said engine is recirculated to a combustion chamber of said engine;
e) detecting or estimating an actual intake air amount of said engine; and
f) calculating an exhaust gas recirculation ratio using the theoretical intake air amount and the actual intake air amount; and
g) controlling said engine using the exhaust gas recirculation ratio.

8. A control method according to claim 7, wherein said step g) includes the steps of:

h) calculating an optimum ignition timing at which an output of said engine becomes maximum, according to the exhaust gas recirculation ratio; and

i) controlling an ignition timing of said engine using the optimum ignition timing.

9.  A control method according to claim 8, wherein said step i) includes the step of j) calculating a knock limit ignition timing according to the exhaust gas recirculation ratio, the knock limit ignition timing corresponding to an occurrence limit of knocking in said engine,
    wherein the ignition timing control is controlled using any one of the optimum ignition timing and the knock limit ignition timing which is set to a more retarded value.

10. A control method according to claim 9, wherein said engine is provided with an intake valve operating characteristic varying mechanism which changes an operating phase of the intake valve, and said step i) further includes the step of k) correcting the knock limit ignition timing according to the operating phase of the intake valve.

11. A control method according to claim 10, wherein said step k) includes the steps of:

    1) calculating an effective compression ratio of said engine according to the operating phase of the intake valve; and
    m) correcting the knock limit ignition timing according to the effective compression ratio.

12. A control system according to any one of claims 7 to 11, further comprising the steps of:

    n) detecting an opening of said throttle valve; and
    o) calculating an effective opening of said throttle valve at which an increasing rate of the intake pressure with respect to an increase in the throttle valve opening becomes equal to or lower than a predetermined increasing rate,

    wherein the exhaust gas recirculation ratio is set to "0" when the throttle valve opening is equal to or greater than the effective opening in said step f).

[FIG. 1]

[FIG. 2]

[FIG. 3]

[FIG. 4]

[FIG. 5]

[FIG. 6]

[FIG. 7]

[FIG. 8]

(a)

(b)

[FIG. 9]

[FIG. 10]

[FIG. 11]

```
              ╭─────────────────────╮
              │  IGNITION TIMING    │
              │   CALCULATION       │
              ╰─────────────────────╯
                        │
S21                     ▼
              ┌─────────────────────┐
              │  CALCULATE IGMBT     │
              └─────────────────────┘
                        │
S22                     ▼
              ┌┤─────────────────────┤┐
              │  IGKNOCK CALCULATION  │
              └┤─────────────────────┤┘
                        │
S23                     ▼
              ╱─────────────────────╲        NO
             ⟨  IGMBT≧IGKNOCK ?      ⟩──────────────┐
              ╲─────────────────────╱              │
                        │ YES                       │
S24                     ▼              S25          ▼
       ┌─────────────────────┐       ┌─────────────────────┐
       │   IGB←IGKNOCK        │       │   IGB←IGMBT          │
       └─────────────────────┘       └─────────────────────┘
                        │                          │
                        ▼◄─────────────────────────┘
S26
              ┌─────────────────────┐
              │  IGLOG←IGB+IGCR      │
              └─────────────────────┘
                        │
                        ▼
                ╭───────────────╮
                │     EXIT       │
                ╰───────────────╯
```

[FIG. 12]

```
              ╭─────────────────────────╮
              │  IGKNOCK CALCULATION     │
              ╰─────────────────────────╯
                        │
S31                     ▼
       ┌───────────────────────────────┐
       │  CALCULATE IGKNOCKB            │
       │  ACCORDING TO NE & GAIRCYL     │
       └───────────────────────────────┘
                        │
S32                     ▼
       ┌───────────────────────────────┐
       │  CALCULATE CMPR                │
       │  ACCORDING TO CAIN             │
       └───────────────────────────────┘
                        │
S33                     ▼
       ┌───────────────────────────────┐
       │  CALCULATE DCMPR               │
       │  ACCORDING TO CMPR & NE        │
       └───────────────────────────────┘
                        │
S34                     ▼
       ┌───────────────────────────────┐
       │  CALCULATE DEGRT               │
       │  ACCORDING TO REGRT & NE       │
       └───────────────────────────────┘
                        │
S35                     ▼
       ┌───────────────────────────────┐
       │  IGKNOCK←                      │
       │  IGKNOCKB+DCMPR+DEGRT          │
       └───────────────────────────────┘
                        │
                        ▼
                ╭───────────────╮
                │     EXIT       │
                ╰───────────────╯
```

[FIG. 13]

(a)

(b)

[FIG. 14]

(a)

(b)

(c)

[FIG. 15]

[FIG. 16]

[FIG. 17]

[FIG. 18]

**EP 2 514 952 A1**

<table>
<tr><td colspan="2" align="center">**INTERNATIONAL SEARCH REPORT**</td><td>International application No.<br>PCT/JP2010/066476</td></tr>
</table>

A. CLASSIFICATION OF SUBJECT MATTER
*F02D21/08*(2006.01)i, *F02D13/02*(2006.01)i, *F02D45/00*(2006.01)i, *F02M25/07*(2006.01)i, *F02P5/15*(2006.01)i, *F02P5/152*(2006.01)i, *F02P5/153*(2006.01)i

According to International Patent Classification (IPC) or to both national classification and IPC

B. FIELDS SEARCHED

Minimum documentation searched (classification system followed by classification symbols)
F02D21/08, F02D13/02, F02D45/00, F02M25/07, F02P5/15, F02P5/152, F02P5/153

Documentation searched other than minimum documentation to the extent that such documents are included in the fields searched
Jitsuyo Shinan Koho           1922-1996   Jitsuyo Shinan Toroku Koho   1996-2010
Kokai Jitsuyo Shinan Koho     1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2006-200460 A  (Honda Motor Co., Ltd.),<br>03 August 2006 (03.08.2006),<br>paragraphs [0006], [0030] to [0036]<br>& US 2006/0011180 A1 | 1-5,7-11<br>6,12 |
| Y<br>A | JP 2007-321705 A  (Mazda Motor Corp.),<br>13 December 2007 (13.12.2007),<br>paragraphs [0014], [0074]<br>(Family: none) | 1-5,7-11<br>6,12 |
| Y<br>A | JP 2008-261256 A  (Toyota Motor Corp.),<br>30 October 2008 (30.10.2008),<br>paragraphs [0024], [0025], [0062]<br>(Family: none) | 1-5,7-11<br>6,12 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 October, 2010 (14.10.10) | Date of mailing of the international search report<br>26 October, 2010 (26.10.10) |
|---|---|
| Name and mailing address of the ISA/<br>Japanese Patent Office | Authorized officer |
| Facsimile No. | Telephone No. |

Form PCT/ISA/210 (second sheet) (July 2009)

25

**INTERNATIONAL SEARCH REPORT**

International application No.

PCT/JP2010/066476

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 08-028364 A (Mitsubishi Electric Corp.),<br>30 January 1996 (30.01.1996),<br>paragraphs [0130], [0131], [0261] to [0264]<br>& US 5488938 A | 1-5,7-11<br>6,12 |
| Y<br>A | JP 2006-200396 A (Hitachi, Ltd.),<br>03 August 2006 (03.08.2006),<br>paragraphs [0002], [0003], [0058] to [0062],<br>[0083], [0100] to [0103], [0151] to [0160];<br>fig. 2<br>& US 2006/0157029 A1 & EP 1683963 A2 | 2-5,8-11<br>1,6,7,12 |
| Y<br>A | JP 2009-030541 A (Toyota Motor Corp.),<br>12 February 2009 (12.02.2009),<br>paragraph [0043]<br>(Family: none) | 3-5,9-11<br>1,2,6-8,12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003269306 A

- JP 2000227013 A